## Europäisches Patentamt

## European Patent Office

## Office européen des brevets

(11) Veröffentlichungsnummer: **0 246 342 B1**

(12) **EUROPÄISCHE PATENTSCHRIFT**

(45) Veröffentlichungstag der Patentschrift: 24.07.91

(51) Int. Cl.⁵: **C09D 5/32**, C09D 5/38

(21) Anmeldenummer: 86106906.0

(22) Anmeldetag: 21.05.86

Die Akte enthält technische Angaben, die nach dem Eingang der Anmeldung eingereicht wurden und die nicht in dieser Patentschrift enthalten sind.

(54) **Anstrichstoffe mit niedrigem Emissionsvermögen im Spektralbereich der Wärmestrahlung.**

(43) Veröffentlichungstag der Anmeldung:
25.11.87 Patentblatt 87/48

(45) Bekanntmachung des Hinweises auf die Patenterteilung:
24.07.91 Patentblatt 91/30

(84) Benannte Vertragsstaaten:
AT BE CH DE FR GB IT LI LU NL SE

(56) Entgegenhaltungen:
EP-A- 0 065 207
US-A- 4 289 677
US-A- 4 311 623

(73) Patentinhaber: Hugo, Gerd
Wiesenweg 4
W-8913 Schondorf am Ammersee(DE)

(72) Erfinder: Hugo, Gerd
Wiesenweg 4
W-8913 Schondorf a.Ammersee(DE)
Erfinder: Deisenroth, Friedrich-Ulf
Auf der Hardt 33-35
W-5204 Lohmar 1(DE)

(74) Vertreter: Türk, Gille, Hrabal
Brucknerstrasse 20
W-4000 Düsseldorf 13(DE)

**Beschreibung**

Die Erfindung betrifft Anstrichstoffe, die ein niedriges Emissionsvermögen im Spektralbereich der Wärmestrahlung und unterschiedliche Farbeigenschaften aufweisen, wobei die Anstrichstoffe gegebenenfalls Metallteilchen hoher elektrischer Leitfähigkeit enthalten können.

Um Energieverluste durch Wärmeabstrahlung zu vermeiden oder zu verringern, ist es häufig erwünscht. eine Oberfläche so auszubilden, daß sie ein niedriges Wärmeemissionsvermögen aufweist. Solche Energieverluste durch Wärmeabstrahlung treten bei warmen Rohrleitungen oder auch an Wandungen hinter Heizkörpern auf. Diese Energieverluste lassen sich in hohem Maße verringern, wenn die Oberflächen von solchen Rohrleitungen derart ausgebildet werden, daß ein niedriges Wärmeemissionsvermögen vorliegt.

Wärmeabstrahlungsverlusten bei Heizkörpern kann dadurch begegnet werden, daß hinter den Heizkörpern reflektierende Oberflächen angeordnet werden. Anstrichstoffe mit speziell eingestelltem Emissionsvermögen können auch dafür verwendet werden, Gegenstände z.B. zur Erkennung mit einem Infrarot-Suchgerät zu markieren. Anstrichstoffe mit niedrigem Emissionsvermögen für Wärmestrahlung werden bei militärischen Tarnungsverfahren gegen Infrarot-Aufklärung eingesetzt.

Bekannte Anstrichstoffe bestehen im wesentlichen aus Binde- und Lösungsmitteln, Pigmenten und verschiedenen Additiven. Die Farbe dieser Anstrichstoffe wird im sichtbaren Spektralbereich durch die Pigmentzusammensetzung bestimmt. Im infraroten Spektralbereich, insbesondere im Bereich der Wärmestrahlung mit Wellenlängen zwischen etwa 2,0 μm und etwa 30 μm, werden dagegen die optischen Eigenschaften der Anstrichstoffe im wesentlichen durch die Bindemitteleigenschaften bestimmt. Diese Art von Anstrichstoffen besitzen ein hohes Emissionsvermögen für Infrarotstrahlung.

Es ist bekannt (DE-OS 31 18 256) das Emissionsvermögen für Wärmestrahlung dadurch zu verringern, daß bis zu 70 Gew.-% Metallpigmente hoher elektrischer Leitfähigkeit hinzugefügt werden. Wenn mehrere unterschiedliche Farbeigenschaften erhalten werden sollen, ist es notwendig Farbpigmente hinzuzufügen, da durch die ausschließliche Verwendung von Metallpigmenten nur graue und olive Farbtöne erhalten werden können. Bei in der DE-OS 31 18 256 angegebenen Beispielen werden Rußpigmente oder Farbpigmente im Farbton RAL 6015 hinzugemischt.

Da diese Farbpigmente, wie alle Pigmente, im thermischen Infrarotbereich stark absorbierend wirken, muß die starke Absorbtion der Pigmente durch hohe prozentuale Anteile an Metallpigmenten ausgeglichen werden. Ferner ist es erforderlich, Binder zu verwenden, die eine sehr hohe Infrarottransmission aufweisen. Dunkle Farben mit sehr niedrigem Wärmeemissionsvermögen lassen sich auf diese Weise nicht herstellen, da der hohe Anteil an Metallpigmenten im sichtoptischen Bereich die Farbe aufhellt bzw. ihr ein metallisches Aussehen verleiht.

Der Erfindung liegt die Aufgabe zugrunde, Anstrichstoffe anzugeben, mit denen Oberflächen erzeugt werden können, die ein niedriges Emissionsvermögen im Spektralbereich der Wärmestrahlung und unterschiedliche Farbeigenschaften aufweisen.

Diese Aufgabe wird erfindungsgemäß durch in den Kennzeichen der Ansprüche 1 und 2 angegebenen Merkmale gelöst.

Unter dem Ausdruck "körperlose Farbstoffe" werden hier solche Farbstoffe verstanden, die

- im Lösungsmittel des Anstrichstoffes gelöst sein können und/oder
- im Binder des Anstrichstoffes selbst gelöst sein können oder
- in kolloider Form vorliegen können, oder
- in gelöster Form in einem pulverförmigen Binder vorliegen können.

Alle diese Maßnahmen führen zu einer Teilchengröße der Farbteilchen bzw. der Farbpigmente, die im Molekularbereich liegt, wodurch bei der spezifischen Absorbtion im Spektralbereich der Wärmestrahlung nur geringe Verluste durch Streuung oder Reflexion auftreten.

Von Vorteil ist hier, daß im Vergleich zu den üblichen Pigmentfarbstoffen, die als größere Teilchen vorliegen, eine wesentlich niedrigere Farbstoffkonzentration notwendig ist, um eine erwünschte Farbe zu erhalten. Mit solchen körperlosen Farbstoffen mit handelsüblichen Bindern, die im Spektralbereich der Wärmestrahlung, insbesondere im Spektralbereich von 3 - 5 und 8 - 14 μm ein gute Transmission aufweisen, lassen sich für den sichtbaren Spektralbereich beliebige, auch dunkle Farben herstellen, die die genannten Nachteile der normal pigmentierten Farben, nämlich im thermischen Infrarot stark zu absorbieren, nicht aufweisen.

Vorteilhafterweise werden solche löslichen Farbstoffe verwendet, die eine hohe UV-Beständigkeit aufweisen, um eine Farbänderung oder ein Verblassen durch Sonneneinstrahlung zu vermeiden. Es ist auch möglich, wie es im Rahmen der Erfindung vorgesehen ist, dem schädlichen Einfluß der Sonneneinstrahlung dadurch zu begegnen, daß dem Anstrichstoff mindestens eine zusätzliche Substanz zugegeben wird, die im UV-Bereich absorbiert oder reflektiert.

Als Binder werden im Rahmen der Erfindung solche bevorzugt, die eine hohe Transmission im Spektralbereich der Wärmestrahlung aufweisen, wie z.B. Zyklo-Kautschuk und Chlor-Kautschuk. Soll auch eine gute Beständigkeit gegen z.B. Öl, Benzin und Chemikalien vorliegen, so werden im Rahmen der Erfindung Binder bevorzugt, die aus der Polyurethane, PVC-Mischpolymerisate, Polyurethan, Polyäthylen/Vinylacetat - Mischpolymerisate, Kohlenwasserstoffharze, Butyl-Kautschuk und Silicon-Alkyd-Harze umfassenden Gruppe ausgewählt werden. In Abhängigkeit von den jeweiligen Anforderungen können auch wässrige Binder, wie beispielsweise Polyurethan/Polyacrylat verwendet werden.

Als besonders vorteilhaft hat es sich herausgestellt, daß, wenn die Anstrichstoffe nach der Erfindung Metallteilchen enthalten, diese als metallisierte Mikrohohlkugeln oder metallisierte Kunststofflakes ausgebildet sind, die vorzugsweise eine unterschiedliche Teilchengröße mit maximalen Abmessungen zwischen 5 und 500 μm aufweisen.

Bei den erfindungsgemäßen Verfahren zu Herstellung einer Oberfläche mit niedrigem Emissionsvermögen im Spektralbereich der Wärmestrahlung und in unterschiedlichen Farbeigenschaften ist zu unterscheiden, ob der Träger, der eine solche Oberfläche erhalten soll, selbst bereits ein niedriges Emissionsvermögen im Spektralbereich der Wärmestrahlung aufweist oder nicht. Im erstgenannten Fall wird bei der Durchführung des Verfahrens gemäß Anspruch 10 das bereits vorliegende, niedrige Emissionsvermögen im Spektralbereich der Wärmestrahlung nahezu kaum beeinträchtigt. Es wird besonders darauf hingewiesen, daß ein solches niedriges Emissionsvermögen im Spektralbereich der Wärmestrahlung nicht nur bei metallischen Flächen vorliegt, sondern auch z.B. durch eine polierte Graphitfolie, wie es im Rahmen der Erfindung vorgesehen ist, hervorgerufen werden kann.

Oberflächen mit niedrigem Emissionsvermögen im Spektralbereich der Wärmestrahlung lassen sich durch Folien mit geringem Emissionsgrad, durch aufzutragende Untergründe, die metallisierte Mikrohohlkugeln oder metallisierte Kunststofflakes oder aber auch Metallteilchen enthalten, erzeugen. Wird bei solchen Oberflächen das Verfahren nach Anspruch 10 angewendet, so erhält man insgesamt Oberflächen mit niedrigem Emissionsvermögen im Spektralbereich der Wärmestrahlung und in unterschiedlichen Farbeigenschaften. Da die die Farbstoffe enthaltende, aufgetragene Schicht keine nennenswerte Absorbtion im Spektralbereich der Wärmestrahlung aufweist, insbesondere wenn ein Binder mit hohem Transmissionsvermögen für die Wärmestrahlung verwendet wird, kann diese Schicht relativ dick aufgetragen werden, so daß eine große Beständigkeit gegenüber mechanischer Beanspruchung erreicht wird. Erfindungsgemäß kann die Oberfläche, die bereits ein niedriges Emissionsvermögen im Spektralbereich der Wärmestrahlung aufweist, eine sandgestrahlte oder ähnlich aufgerauhte metallische Oberfläche oder aber auch ein Metallgitter oder -netz oder ein metalldurchwirktes Stoffgewebe sein. Der Anstrichstoff kann erfindungsgemäß in Abhängigkeit von den Erfordernissen als Flächen unterschiedlicher Größe und unterschiedlichen Emissionsvermögens aufgetragen werden.

Wenn eine Oberfläche mit niedrigem Emissionsvermögen im Spektralbereich der Wärmestrahlung und in unterschiedlicher Farbeigenschaft hergestellt werden soll, wobei ein beliebiger Träger, insbesondere ein Träger, dessen Oberfläche kein niedriges Emissionsvermögen im Spektralbereich der Wärmestrahlung aufweist, so ist erfindungsgemäß das Verfahren nach Anspruch 9 anzuwenden. Die in diesem Fall in dem Anstrichstoff enthaltenen Metallteilchen geben der aufgetragenen Anstrichstoffschicht ein niedriges Emissionsvermögen im Spektralbereich der Wärmestrahlung. Diese durch die Metallteilchen hervorgerufene Wirkung wird durch die im Rahmen der Erfindung vorgesehenen Farbstoffe zum Erreichen einer erwünschten Farbe nicht bzw. im wesentlichen nicht beeinträchtigt. Auch in diesem Fall kann im Rahmen der Erfindung der Anstrichstoff als Flächen unterschiedlicher Größe und unterschiedlichen Emissionsvermögens aufgetragen werden.

Die folgenden Beispiele dienen dazu, die Erfindungsgegenstände näher zu erläutern, ohne diese jedoch einzuschränken.

Beispiel 1

Es wurde ein Anstrichstoff hergestellt, der 20 Gew.-% in Äthylglycol gelöste Zapon-Farbstoffe und 80 Gew.-% Einkomponenten-Polyurethan-Lack enthielt. Es wurden grüne Zapon-Farbstoffe der Firma BASF verwendet.

Der Anstrichstoff wurde auf die Metallteile eines Fahrzeuges aufgetragen, wobei die Metallteile durch Sandstrahlen aufgerauht waren , so daß eine metallisch glänzende Oberfläche entstand.

Das Infrarot-Emissionsvermögen betrug in den Spektralbereichen 3 - 5 und 8 - 14 μm 0,4 bzw. 0,55. Durch die aufgerauhte, sandgestrahlte Oberfläche wurden direkte Refle tionen des kalten Himmels oder der Sonne vermieden. Diese Oberfläche wirkte wie ein Lambert'scher-Strahler, da die darüber aufgetragenen Anstrichstoffschicht im thermischen Infrarotbereich transparent war.

Zum Vergleich wurde eine in der gleichen Weise behandelte Metalloberfläche mit einem normalen, pigmentierten Anstrichstoff beschichtet. Das Infrarot-Emissionsvermögen war größer als 0,8, da die Wirkung der Metallschicht durch die Absorbtion der Farbpigmente weitgehend wieder aufgehoben wurde.

## Beispiel 2

Eine PVC-Folie wurde mit einem Metallanstrich versehen, der aus metallisierten Mikrohohlkugeln unterschiedlicher Größe bestand, die in einem weitgehend im Infraroten durchlässigen PVC-Lack dispergiert waren. Der Durchmesser der Mikrohohlkugeln lag in dem Bereich von 6 - 50 µm.

Auf diese erste Metallanstrichschicht wurde eine zweite Anstrichschicht aufgetragen, die aus einem weitgehend infrarotdurchlässigen PVC-Lack bestand, der mit braunen, transparenten Farbstoffen der Hoechst AG eingefärbt war.

Das Infrarot-Emissionsvermögen der so behandelten PVC-Folie lag in den Spektralbereichen 3 - 5 und 8 - 14 µm bei 0,35 bzw. 0,45.

Ähnlich wie beim Beispiel 1 wirkte der erste Metallanstrich bzw. Grundierungsanstrich durch die zweite mit körperlosen Farbstoffen eingefärbte Anstrichschicht hindurch, die im Infraroten im wesentlichen durchlässig ist.

Die Verwendung von Mikrohohlkugeln unterschiedlichen Durchmessers bei der ersten Anstrichschicht hatte zur Folge, daß diese erste Anstrichschicht wie ein Lambert'scher-Strahler oder Reflektor wirkte, d.h., Abstrahlung und Reflexion waren gestreut.

Der gleiche Versuch wurde mit der Abänderung durchgeführt, daß statt der metallisierten Mikrohohlkugeln Aluminiumpigmente mit einer durchschnittlichen Teilchengröße von 30 µm verwendet wurden. Die Ergebnisse waren vergleichbar mit denjenigen, die mit Mikrohohlkugeln erzielt wurden.

## Beispiel 3

Es wurde ein Anstrichstoff hergestellt, bei dem metallisierte Kunststofflakes mit einer Größe zwischen 10 und 40 µm in einem infrarotdurchlässigen Binder dispergiert wurden, der mit körperlosen Farbstoffen dunkelgrün eingefärbt war. Es wurde bei diesem Versuch ein Butyl-Kautschuklack mit löslichen Zapon-Farbstoffen eingefärbt. Das Mischungsverhältnis von Butyl-Kautschuk zu in Dichlormethan gelösten Zapon-Farbstoffen betrug 70 zu 30 Gew.-%. Der Metallanteil bei dem Anstrichstoff lag bei 10 Vol.-%.

Der so hergestellt Anstrichstoff wurde auf ein Segeltuch aufgetragen. Das Infrarot-Emissionsvermögen betrug in den Spektralbereichen von 3 - 5 und 8 - 14 µm 0,4 bzw. 0,45.

## Beispiel 4

Auf ein Fliegengitter aus blankem Metall wurde ein Anstrichstoff aufgetragen, der aus einem weitgehend infrarotdurchlässigen Binder und einem körperlosen, braunen Farbstoff bestand. Als Binder wurde Polyurethan verwendet, der mit einem löslichen Zapon-Farbstoff der Firma BASF braun eingefärbt war. Der Anstrichstoff bestand aus 70 Gew.-% Einkomponenten-Polyurethan-Lack und 30 Gew.-% in Äthylglycol gelöstem, braunen Zapon-Farbstoff.

Das Infrarot-Emissionsvermögen des derart behandelten Fliegengitters betrug im Spektralbereich von 3 - 5 µm 0,45 und im Spektralbereich von 8 - 14 µm 0,65, da der Binder in diesem Bereich weniger durchlässig für infrarote Strahlung ist.

## Beispiel 5

Anstrichstoffe mit der Farbgebung grün, braun und schwarz wurden in nebeneinander angeordneten unregelmäßigen Flecken auf eine sandgestrahlte Metallplatte aufgetragen. Die Anstrichstoffe bestanden aus einem Einkomponenten-Polyurethan-Lack, in dem jeweils die löslichen Zapon-Farbstoffe Grün, Braun und Schwarz eingebracht waren. Die Zapon-Farbstoffe waren in Äthylglycol gelöst und es wurden 20 Gew.-% dieser Lösung und 80 Gew.-% Polyurethan-Lack verwendet. Die Farbe Schwarz wurde aus den gelösten Zapon-Farbstoffen Gelb, Blau und Rot dargestellt.

Das Infrarot-Emissionsvermögen lag im Spektralbereich von 3 - 5 µm für die Farben Grün, Braun und Schwarz bei 0,45, 0,5 bzw. 0,6. Im Spektralbereich von 8 - 14 µm lag das Infrarot-Emissionsvermögen dieser Farben etwas höher, da in diesem Bereich der Polyurethan-Lack eine schlechtere Infrarot-Transmission aufweist. Die Infrarot-Emissionsvermögen für Grün, Braun und Schwarz ergaben sich zu 0,55, 0,65 bzw. 0,75.

## Beispiel 6

Auf eine Polyurethan-Hartschaumplatte wurde ein grüner Anstrichstoff aufgetragen, der aus einem infrarotdurchlässigen Binder aus Butyl-Kautschuk und grünem in Dichlormethan gelösten Zapon-Farbstoffen bestand und in dem metallisierte Mikrohohlkugeln mit einem durchschnittlichen Durchmesser von 20 µm dispergiert waren. Das Mischungsverhältnis von Butyl-Kautschuk zu den gelösten Farbstoffen lag bei 80 zu 20 Gew.-%. Der Anteil an Aluminiumpigmenten betrug 5 Vol.-% zum Gesamtanstrichstoff.

Das Infrarot-Emissionsvermögen der so behandelten Oberfläche lag im Spektralbereich von 3 - 5 µm bei 0,45 und im Spektralbereich von 8 - 14 µm bei 0,55. Zusätzlich zu dem Infrarot-Emissionsvermögen wurde auch die Radar-Transmission bei 10 GHz gemessen. Es ergab sich eine Dämpfung des Radarsignals unter 1 db.

## Beispiel 7

Auf eine polierte Graphitfolie wurde ein Anstrichstoff aufgetragen, der aus einem Einkomponenten-Polyurethan-Lack und gelösten Zapon-Farbstoffen der Farbe Grün bestand. Das Mischungsverhältnis von Einkomponenten-Polyurethan-Lack zu in Äthylglycol gelösten Zapon-Farbstoffen betrug 80 zu 20 Gew.-%.

Das Infrarot-Emissionsvermögen wurde in den Spektralbereichen von 3 - 5 µm und von 8 - 14 µm zu 0,45 bzw. 0,6 gemessen.

Beispiel 8

Auf eine handelsübliche, mit Aluminium beschichtete Isoliertapete, wie sie im Wohnungsbau zum Vermeiden von Wärmeverlusten eingesetzt wird, wurde ein Anstrichstoff aufgebracht, der aus einem Mischpolyurethan-Lack bestand, der mit gelösten Zapon-Farbstoffen braun eingefärbt war. Das Mischungsverhältnis von Mischpolyurethan-Lack zu in Äthylglycol gelösten Zapon-Farbstoffen lag bei 80 zu 20 Gew.-%.

Das Infrarot-Emissionsvermögen ergab in den Spektralbereichen von 3 - 5 und von 8 - 14 µm 0,4 bzw. 0,5.

Beispiel 9

In einem wässrigen Binder aus Polyurethan/Polyacrylat, der mit wasserlöslichen Farbstoffen grün eingefärbt war, wurden 10 Vol.-% metallisierte Kunststofflakes dispergiert. Dieser derart hergestellte Anstrichstoff wurde auf eine Kalksteinmauer aufgetragen.

Das Infrarot-Emissionsvermögen der so behandelten Oberfläche der Kalksteinmauer betrug 0,5. Das Infrarot-Emissionsvermögen der übrigen Oberfläche, auf die ein normaler, grüne Frabpigmente enthaltender Anstrichstoff aufgetragen war, lag bei 0,85.

Aufgrund der Erfindung ist es möglich, Anstrichstoffe herzustellen, die ein niedriges Emissionsvermögen im Spektralbereich der Wärmestrahlung und unterschiedliche Farbeigenschaften aufweisen. Es hängt von der Art der verwendeten Farbstoffe und der Art des verwendeten Binders ab, ob die Farbstoffe zunächst in einem Lösungsmittel gelöst werden müssen, um dann mit dem Binder vermischt zu werden, ober ob die Farbstoffe unmittelbar in dem Binder gelöst werden können. Diese beiden Möglichkeiten sind auch im Rahmen der Erfindung vorgesehen. Ebenso ist im Rahmen der Erfindung vorgesehen, die erfindungsgemäßen Anstrichstoffe und die nach den erfindungsgemäßen Verfahren hergestellten Oberflächen für Infrarot-Tarnungszwecke anzuwenden.

**Patentansprüche**

1. Anstrichstoff, der ein niedriges Emissionsvermögen im Spektralbereich der Wärmestrahlung und unterschiedliche Farbeigenschaften aufweist und der Metallteilchen hoher elektrischer Leitfähigkeit enthält, dadurch **gekennzeichnet**, daß der Anstrichstoff zur Farbgebung lediglich mindestens einen körperlosen und/oder transparenten Farbstoff enthält, dessen Farbpigmente aufgelöst sind, und daß die Farbpigmente eine Teilchengröße mit Abmessungen aufweisen derart, daß ihre streuende und absorbierende Wirkung im Spektralbereich der Wärmestrahlung klein ist.

2. Anstrichstoff, der ein niedriges Emissionsvermögen im Spektralbereich der Wärmestrahlung und unterschiedliche Farbeigenschaften aufweist, dadurch **gekennzeichnet**, daß der Anstrichstoff zur Farbgebung lediglich mindestens einen körperlosen und/oder transparenten Farbstoff enthält, dessen Farbpigmente eine Teilchengröße mit Abmessungen aufweisen derart, daß ihre streuende und absorbierende Wirkung im Spektralbereich der Wärmestrahlung klein ist,

3. Anstrichstoff nach Anspruch 1 oder 2, dadurch **gekennzeichnet**, daß der mindestens eine aufgelöste Farbstoff in einem Binder dispergiert ist, der eine hohe Transmission im Spektralbereich der Wärmestrahlung, vorzugsweise im Spektralbereich von 3 - 5 und 8 - 14 µm aufweist.

4. Anstrichstoff nach Anspruch 1 oder 2, dadurch **gekennzeichnet**, daß der mindestens eine aufgelöste Farbstoff in einem Binder dispergiert ist, der aus der PVC-Mischpolymerisate, Polyurethan, Polyäthylen/Vinylacetat-Mischpolymerisate, Kohlenwasserstoffharze, Butylkautschuk und Silicon-Alkyd-Harze und wässrige Binder umfassenden Gruppe ausgewählt ist.

5. Anstrichstoff nach Anspruch 4, dadurch **gekennzeichnet**, daß der wässrige Binder Polyurethan/Polyacrylat ist.

6. Anstirchstoff nach einem der Ansprüche 1 bis 5, dadurch **gekennzeichnet**, daß der Anstrichstoff mindestens eine zusätzliche Substanz enthält, die im nahen UV-Bereich absorbiert oder reflektiert.

7. Anstrichstoff nach Anspruch 1, dadurch **gekennzeichnet**, daß die im Anstrichstoff enthaltenen Metallteilchen eine unterschiedliche Teilchengröße aufweisen, vorzugsweise mit Ab-

messungen von 6 - 50 $\mu$m.

8. Anstrichstoff nach Anspruch 1, dadurch **gekennzeichnet**, daß die im Ansprichstoff enthaltenen Metallteilchen als metallisierte Mikrohohlkuglen oder metalliserte Kunststofffflakes ausgebildet sind, die vorzugsweise eine unterschiedliche Teilchengröße mit Abmessungen zwischen 5 und 500 $\mu$m aufweisen.

9. Verfahren zur Herstellung einer Oberfläche mit niedrigem Emissionsvermögen im Spektralbereich der Wärmestrahlung und in unterschiedlichen Farbeigenschaften, dadurch **gekennzeichnet**, daß ein Anstrichstoff gemäß Anspruch 1 oder gemäß Anspruch 1 in Kombination mit mindestens einem der Ansprüche 3 bis 8 auf einen Träger aufgebracht wird.

10. Verfahrung zur Herstellung einer Oberläche mit niedrigem Emissionsvermögen im Spektralbereich der Wärmestrahlung und in unterschiedlichen Farbeigenschaften, dadurch **gekennzeichnet**, daß ein Anstrichstoff gemäß Anspruch 2 oder gemäß Anspruch 2 in Kombination mit mindestens einem der Ansprüche 3 bis 6 auf eine Oberlfäche aufgebracht wird, die ein niedriges Emissionsvermögen im Spektralbereich der Wärmestrahlung aufweist.

11. Verfahren nach Anspruch 10, dadurch **gekennzeichnet**, daß die Oberfläche mit niedrigem Emissionsvermögen im Spektralbereich der Wärmestrahlung eine sandgestrahlte oder ählich aufgerauhte metallische Oberfläche ist.

12. Verfahren nach Anspruch 10, dadurch **gekennzeichnet**, daß die ein niedriges Emissionsvermögen im Spektralbereich der Wärmestrahlung aufweisende Oberfläche eine metallhaltige Grundierung ist.

13. Verfahren nach Anspruch 12, dadurch **gekennzeichnet**, daß als metallhaltige Grundierung ein Grundierungsstoff verwendet wird, der metallisierte Mikrohohlkugeln oder metallisierte Kunststofflakes, vorzugsweise mit unterschiedlicher Teilchengröße zwischen 5 und 500 $\mu$m, enthält.

14. Verfahren nach Anspruch 10, dadurch **gekennzeichnet**, daß die ein niedriges Emissionsvermögen im Spektralbereich der Wärmestrahlung aufweisende Oberfläche ein Metallgitter oder - netz oder ein metalldurchwirktes Stoffgewebe ist.

15. Verfahren nach Anspruch 9 oder 10, dadurch **gekennzeichnet,** daß mindestens zwei Anstrichstoffe in Flächen unterschiedlicher Größe und unterschiedlichen Emissionsvermögens im Spektralbereich der Wärmestrahlung aufgetragen werden.

16. Verwendung der Anstrichstoffe nach einem der Ansprüche 1-8 zur Herstellung von Oberflächen mit niedrigem Emissionsvermögen im Spektralbereich der Wärmestrahlung.

## Claims

1. Coating material, which has a low emissivity in the spectral region of thermal radiation and varying colouring properties and contains metallic particles of high electrical conductivity, characterized in that for colouring, the coating material simply contains at least one colouring material which is without body and/or transparent and whose colouring pigments are dissolved and that the colouring pigments have a particle size with dimensions such that their scattering and absorbing action in the spectral region of thermal radiation is small.

2. Coating material, which has a low emissivity in the spectral region of thermal radiation and varying colouring properties, characterized in that for colouring, the coating material simply contains at least one colouring material which is without body and/or transparent and whose colouring pigments have a particle size with dimensions such that their scattering and absorbing action in the spectral region of thermal radiation is small.

3. Coating material according to Claim 1 or 2, characterized in that the at least one dissolved colouring material is dispersed in a binder which has a high transmission in the spectral region of thermal radiation, preferably in the spectral region of 3-5 and 8-14 $\mu$m.

4. Coating material according to Claim 1 or 2, characterized in that the at least one dissolved colouring material is dispersed in a binder which is selected from the group comprising PVC copolymers, polyurethane, polyethylene/vinyl acetate copolymers, hydrocarbon resins, butyl rubber and silicone-alkyd resins and aqueous binders.

5. Coating material according to Claim 4, characterised in that the aqueous binder is polyurethane/polyacrylate.

6. Coating material according to one of Claims 1 to 5; characterized in that the coating material contains at least one additional substance which absorbs or reflects in the near UV region.

7. Coating material according to Claim 1, characterized in that the metallic particles contained in the coating material have a varying particle size, preferably with dimensions of 6050 μm.

8. Coating material according to Claim 1, characterized in that the metallic particles contained in the coating material have the form of metallized hollow microspheres or metallized plastics flakes, which preferably have a varying particle size with dimensions between 5 and 500 μm.

9. Process for the production of a surface with low emissivity in the spectral region of thermal radiation and in varying colouring properties, characterized in that a coating material according to Claim 1 or according to Claim 1 in combination with at least one of Claims 3 to 8 is applied to a substrate.

10. Process for the production of a surface with low emissivity in the spectral region of thermal radiation and in varying colouring properties, characterized in that a coating material according to Claim 2 or according to Claim 2 in combination with at least one of Claims 3 to 6 is applied to a surface which has a low emissivity in the spectral region of thermal radiation.

11. Process according to Claim 10, characterized in that the surface with low emissivity in the spectral region of thermal radiation is a sand-blasted or similarly roughened metallic surface.

12. Process according to Claim 10, characterized in that the surface having a low emissivity in the spectral region of thermal radiation is a metal-containing primer.

13. Process according to Claim 12, characterized in that there is used as metal-containing primer a priming material which contains metallized hollow microspheres or metallized plastics flakes, preferably with varying particle size of between 5 and 500 μm.

14. Process according to Claim 10, characterized in that the surface having a low emissivity in the spectral region of thermal radiation is a metallic lattice or metallic mesh or a metal-interwoven woven fabric.

15. Process according to Claim 9 or 10, characterized in that at least two coating materials are applied in areas of varying extent and varying emissivity in the spectral region of thermal radiation.

16. Use of the coating materials according to one of Claims 1-8 for the production of surfaces with low emissivity in the spectral region of thermal radiation.

**Revendications**

1. Peinture ou vernis qui possède un faible pouvoir d'émission dans le domaine spectral du rayonnement thermique et diverses propriétés colorantes, et qui contient des particules métalliques de haute conductivité électrique, **caractérisé** en ce que la peinture ou le vernis contient simplement au moins pour la coloration une matière sans solide et/ou transparente, dont les pigments colorés sont dissous, et en ce que les pigments colorés sont d'une granulométrie correspondant à des dimensions telles que leur action de diffusion ou d'absorption est faible dans le domaine spectral du rayonnement thermique.

2. Peinture ou vernis qui possède un faible pouvoir d'émission dans le domaine spectral du rayonnement thermique et diverses propriétés colorontes, **caractérisé** en ce que la peinture ou le vernis contient simplement au moins pour la coloration une matière sans solide et/ou transparente, dont les pigments colorés sont dissous, et en ce que les pigments colorés sont d'une granulométrie correspondant à des dimensions telles que leur action de diffusion ou d'absorption est faible dans le domaine spectral du rayonnement thermique.

3. Peinture ou vernis selon la revendication 1 ou 2, **caractérisé** en ce que le colorant dissous au moins unique est dispersé dans un liant, qui possède une transmission élevée dans le domaine spectral du rayonnement thermique, de préférence dans le domaine spectral de 3 à 5 et de 8 à 14 μm.

4. Peinture ou vernis selon la revendication 1 ou 2, **caractérisé** en ce que le colorant dissous au moins unique est dispersé dans un liant, qui est choisi dans un groupe comprenant des polymères mélangés de chlorure de polyvinyle (PVC), le polyuréthane, des polymères mélangés de polyéthylène/acétate de vinyle, des résines d'hydrocarbures, du caoutchouc butyl, et des résines d'alkydes de silicone et des liants aqueux,

5. Peinture ou vernis selon la revendication 4, **caractérisé** en ce que le liant aqueux est un polyuréthane/polyacrylate.

6. Peinture ou vernis selon l'une des revendications 1 à 5, **caractérisé** en ce que la peinture ou le vernis contient au moins une substance additionnelle, qui est absorbée ou réfléchie dans le domaine des UV proches.

7. Peinture ou vernis selon la revendication 1, **caractérisé** en ce que les particules métalliques contenues dans la peinture ou le vernis sont de granulométries différentes, les dimensions étant de préférence comprises entre 6 et 50 $\mu$m.

8. Peinture ou vernis selon la revendication 1, **caractérisé** en ce que les particules métalliques contenues dans la peinture ou le vernis sont constituées de billes creuses microscopiques métallisées ou de paillettes de matière plastique métallisées, de granulométries diverses, de dimensions comprises entre 5 et 500 $\mu$m.

9. Procédé de fabrication d'une surface à faible pouvoir d'émisson dans le domaine spectral du rayonnement thermique et pour diverses propriétés colorantes, **caractérisé** en ce qu'une peinture ou un vernis selon la revendication 1, ou selon la revendication 1 en combinaison avec au moins l'une des revendications 3 à 8, est appliqué sur un support.

10. Procédé de fabrication d'une surface à faible pouvoir d'émission dans le domaine spectral du rayonnement thermique et comportant diverses propriétés colorantes, **caractérisé** en ce qu'une matière colorante selon la revendication 2, ou selon la revendication 2 en combinaison avec au moins l'une des revendications 3 à 6, est appliquée sur une surface qui possède un faible pouvoir d'émission dans le domaine spectral du rayonnement thermique.

11. Procédé selon la revendication 10, **caractérisé** en ce que la surface à faible pouvoir d'émission dans le domaine spectral du rayonnement thermique est une surface métallique sablée ou rendue rugueuse d'une manière similaire.

12. Procédé selon la revendication 10, **caractéri-**

**sé** en ce que la surface possédant un faible pouvoir d'émission dans le domaine spectral du rayonnement thermique est un apprêt contenant un métal.

13. Procédé selon la revendication 12, **caractérisé** en ce que l'on utilise comme apprêt contenant un métal une matière d'apprêt qui contient des billes creuses microscopiques métallisées ou des paillettes de matière plastique métallisées, de préférence de granulométries diverses comprises entre 5 et 500 $\mu$m.

14. Procédé selon la revendication 10, **caractérisé** en ce que la surface possédant un faible pouvoir d'émission dans le domaine spectral du rayonnement thermique est une grille ou un réseau métallique ou un tissu entretissé de métal.

15. Procédé selon la revendication 9 ou 10, **caractérisé** en ce qu'au moins deux peintures ou vernis sont appliqués sur des surfaces de dimensions différentes et de pouvoirs d'émission différents dans le domaine spectral du rayonnement thermique.

16. Emploi des peintures ou vernis selon l'une des revendications 1 à 8 pour fabriquer des surfaces à faible pouvoir d'émission dans le domaine spectral du rayonnement thermique.